# EUROPEAN PATENT SPECIFICATION

(11) **EP 4 334 194 B1**
(45) Date of publication and mention of the grant of the patent: **13.05.2026**
(21) Application number: 22719631.8
(22) Date of filing: 10.04.2022
(51) Int. Cl.: B62J 9/24, B62J 9/27, B62J 11/24

(54) **TOPCASE FOR MOTOR VEHICLE**
TOPCASE FÜR MOTORFAHRZEUG
TOPCASE POUR VÉHICULE À MOTEUR

(30) Priority: 03.05.2021 IT 202100011159
(43) Date of publication of application: 13.03.2024
(73) Proprietor: Candelo, Isabella, 16122 Genova (IT); Candelo, Carolina, 16122 Genova (IT)
(72) Inventor: CANDELO, Roberto, 16011 Arenzano (GE) (IT)
(74) Representative: Karaghiosoff, Giorgio Alessandro
(86) International application number: PCT/IB2022/053345
(87) International publication number: WO 2022/234367

(56) References cited:
- WO-A1-2021/014336
- DE-U1- 9 413 276
- JP-A- H08 230 737

## Description

### TEXT OF THE DESCRIPTION

The present invention relates to a removable trunk for a motor cycle or the like.

In particular, the invention relates to trunks of the type comprising:
a three-dimensional shell or a soft and flexible casing closed on itself which defines a housing compartment and is formed by two parts of shell or casing which mutually complete each other in said three-dimensional shell or in said flexible casing, said at least two parts of shell or casing are separated from each other by a separation line extending from one end to the other of a hinge portion of said two shell or casing parts to each other, in such a way the two parts of the shell or casing can be moved away from each other and towards each other respectively in an open position of said three-dimensional shell or casing and in a closed position of said three-dimensional shell or casing, and means for removably retaining said two said shell portions to each other in said closed position of the three-dimensional shell or of said casing;
removable attachment members of said three-dimensional shell to a structural part of the motor cycle or the like, which members comprise at least a first hooking element intended to be stably fixed to said structural part of the motor cycle or the like and a second engagement element which is carried by at least one of said two parts of the shell or casing and which can be engaged and disengaged from said hooking element by means of a relative movement along an engagement/disengagement stroke according to a predetermined path, a further locking element being provided of said engagement element in said hooking element, in the engagement position which is switchable from a locking position into an unlocking position.

This particular type of trunks has the advantage that can be separated from the motor cycle and used as a transport bag. However, currently on the market, trunks, typically made of rigid material, for example ABS or other plastic or metal materials, have complicated and not entirely efficient mechanisms for removable attachment to the motor cycle.

One of the drawbacks of known trunks is that the closing mechanism of the half-shells defining the trunk also acts as a locking device for the attaching elements of the trunk to the motor cycle, so that it may happen that the trunk is inadvertently released from its supports when, on the other hand, a user would simply like to open the upper half-shell to position or remove, for example, a helmet.

Document WO2021014336A1 discloses an attachment system for attaching a storage container to a vehicle which includes a passive attachment device for securing the storage container to the vehicle. The passive attachment device automatically secures the storage container to the vehicle when the storage container is positioned in place on the vehicle. The attachment system also includes an active attachment device manually operable by a user to selectively lock the storage container in place on the vehicle when the storage container is secured to the vehicle via the passive attachment device. The active attachment device prevents motion of the storage container relative to the vehicle when the active attachment device is engaged so as to lock the storage container in place on the vehicle. A vehicle including the storage container and the attachment system is also provided. A storage container assembly including the storage container and passive and active attachment devices is also provided.

Document JPH08230737A discloses a removable attachment members of a three-dimensional shell to a structural part of a motor vehicle or the like which members being engageable and disegngageable by means of a relative engagement and disengagement path or stroke along a circumferential arc, so that the saod engagement between the three-dimensional shell and the structural part of the motor vehicle or the like occurs by rotating the said three-dimensional shell relatively to the said structural part. Releasable locking means are provided which prevents rotation in the direction of disengagement.

The invention, therefore, has the scope to improve the current trunks from the point of view of the means of removable attachment to the motor cycle so as to overcome its drawbacks.

The invention achieves the scope by means of a trunk of the type comprising the combination of features according to independent claim 1.

In this way, in order to allow the detachment of the trunk, it is necessary not only to act on the locking elements, but also to make the trunk rotating of a certain angle in order to release the engagement element from the hooking element. This makes very unlikely the involuntary detachment of the trunk from the motor cycle.

Here, express reference is made to the definition of the term three-dimensional shell, both for the description and for the claims, meaning by descriptive simplicity and understanding, both a shell made of such material that maintains a predetermined three-dimensional shape and a shell of soft material, such as a fabric, a leaf, or the like which form a sack, a bag, a pocket which is closable and which varies its shape according to the level of filling.

According to the invention, the same locking elements of the trunk in the condition attached to the motor cycle also define the locking elements of the trunk in the closed condition which are activated contextually.

Thanks to this feature, a trunk is obtained which can be easily attached and separated from the motor cycle and which with the same and unique system and with a minimum of movements allows to be locked and unlocked from the attached condition to the motor cycle and contextually ensures the locking in closed condition of trunk when this is attached and locked on the motorbike, preventing it from involuntary detachment.

The executive variants can be different, depending on the aesthetic shape of the trunk, the type of vehicle, the material with which the trunk is made.

Advantageously, the locking elements can be activated or deactivated by means of a key activation/deactivation mechanism.

Basically, for the actuation of the locking elements, in the preferred embodiment a first movement involves the actuation of said elements for locking or unlocking the engagement element respectively in and from the hooking element.

Subsequently, in a further movement step, or contextually to the first actuation movement of the attaching elements, there is also the engagement of the same with corresponding seats or projections couplings fixed to the three-dimensional shell, preferably to the part of the shell that does not carry the engagement element.

And finally, a third step provides for the actuation of the key mechanism to lock or unlock the locking elements in the active condition of locking the engagement element in the locking element and therefore of the trunk to the motorcycle and holding the trunk in the closed condition.

Then the trunk is secured to the motorcycle both against detachment and contextually against opening thereof with a maximum of three movements and a minimum of two movements and vice versa.

Among the several possible embodiments for the hooking element and the engagement element, a preferred form provides that the hooking element comprises at least one arched hook oriented with the engagement opening substantially vertical, while the engagement element carried by one of the two parts of the shell is provided with at least one corresponding arcuate engagement wing, which wing is intended to be engaged in the corresponding hook by means of a translation that brings the wing into an alignment position with the opening of the hook followed by a rotation on a substantially horizontal or slightly inclined plane thus creating a sort of bayonet coupling. The hooking element and the engagement element are advantageously provided with cooperating guides for relative positioning in a correct alignment position of the wing on the hook. In this way, a precise position of the engagement element is attached with respect to the hooking element that allows the engagement/disengagement of the parts. Such position is advantageously corresponding to an angularly offset position of the engagement element with respect to the hooking element so that the separation of the trunk from the frame is not possible when the two elements are aligned thus increasing the safety of the motor cycle.

Also in this case, the configuration and distribution of the hooks and of the corresponding and cooperating wings respectively of the hooking element and of the engagement element can be different and substantially optimized with reference to the contingent boundary conditions defined by the structure of the motor cycle and/or from the aesthetic shape of the three-dimensional shell that forms the trunk.

For the pure purpose of demonstrating the multiplicity and obviousness of the possible variants, the hooks can be provided associated with the part of the shell and the wings associated with the motor cycle.

In one configuration, the hook or hooks typically extend along a circumference so as to form an annular groove interrupted by shaped apertures so as to receive corresponding protrusions of the engagement wing when the engagement element is made to overlap the hooking element.

The apertures and the corresponding protrusions are advantageously provided offset so that the engagement element and the hooking element can be coupled when the engagement element is rotated by a determined angle with respect to the hooking element. In this way, to release the trunk it is necessary to pass from a hooking position wherein the engagement element is substantially aligned with the hooking element to an offset position wherein the engagement element is rotated by the aforementioned offset angle with respect to the hooking element.

Other possible variants fall within the scope of the opportunity choices that the skilled in the art can make by drawing on solutions known from his basic technical background.

As regards the locking elements, a preferred embodiment provides that these are defined by a lever mounted oscillating around a transverse axis with reference to the direction of motion of the motor cycle and at or near the rear end of the hooking element.

Said lever can be moved angularly, alternatively in a position of non-interference with the three-dimensional shell and/or the engagement element engaged on the hooking element so that the engagement element and therefore said shell can be rotated together along the engagement/disengagement stroke from the engagement element and in a position tilted upwards against the rear side of the three-dimensional shell so as to provide a stopper to the free rotation of the engagement element in the disengagement direction of the latter from the hooking element.

In one embodiment, the locking elements comprise a locking element of the disengagement stroke of the engagement element from the engaged condition in the hooking element to the disengaged condition therefrom. Said locking element is advantageously associated with the lever and comprises at least one protrusion/aperture which is coupled with a corresponding aperture/protrusion of the engagement element when the lever is in a position tilted upwards so as to prevent the rotation of the engagement element with respect to the hooking element.

Any type of coupling can obviously be adopted. For example, one or more hooks can be used, in particular a pair of hooks, cooperating with corresponding wings provided on the engagement element or vice versa.

As regards the key mechanism which allows or prevents the activation/deactivation of the locking elements, such a mechanism for activating/deactivating the locking elements and in particular of the locking lever is advantageously defined by retaining means for said locking lever in the raised locking position against the rear side of the three-dimensional shell, which retaining means are controllable in the activation/deactivation position by means of a key mechanism.

In an advantageous configuration, the retaining means comprise cooperating mutual engagement means between the engagement element and the lever controlled by a key mechanism for locking/unlocking in the engagement position of said mutual engagement means for the lever and the engagement element.

At least the shell part which does not carry the engagement element and the locking element has cooperating mutual engagement means for the locking/unlocking of said locking element on said shell part.

The cooperating mutual engagement means advantageously comprise an engagement projection on which the hooking lever overlaps against the rear side of the trunk so as to prevent the trunk from opening when the lever is in the locking position.

The key locking of the lever to the engagement element increases the strength of the structure with respect to the solution with the key lock of the lever on the top half-shell typically adopted in the known trunks.

As regards the solution which provides for an oscillating lever for locking the trunk in the condition mounted on the motor cycle, which lever is articulated to the hooking element integral with the motor cycle and is superimposed on the three-dimensional shell that forms the trunk in the active locking condition, it should be noted how said lever also defines a rear retaining stop of the trunk which therefore allows the inertia to be discharged during acceleration, not only on the hooks of the hooking element, but also on a rear stop element which is precisely defined by said locking lever.

Further characteristics relating to improvements or advantageous constructive choices are the subject of the dependant claims.

These and other characteristics and the advantages of the present invention will become clearer from the following description of some executive examples illustrated in the attached drawings wherein:
Figure 1 illustrates a side view of a motor cycle with the trunk according to an embodiment of the present invention mounted on a rear plate.
Figure 2 illustrates a perspective view of an exemplary embodiment of a trunk according to the present invention separated from the motor cycle.
Figures 3 and 4 respectively show an enlarged view below of the trunk according to a first variant embodiment and of the corresponding coupling plate intended to be stably attached to the motor cycle correspondingly to Figure 1.
Figure 5 shows a perspective side view of the hooking plate and the engagement plate.
Figure 6 shows a bottom view of the trunk with the engagement plate highlighted.
Figure 7 shows a side view of the engagement plate in the mounted position of the hooking plate (in transparency) with the key device inserted on.
Figures 8 and 9 show the trunk with the lever released, respectively in the angular position for locking and unlocking from the frame.
Figure 10 illustrates a view of the trunk with the lever in the hooking position.

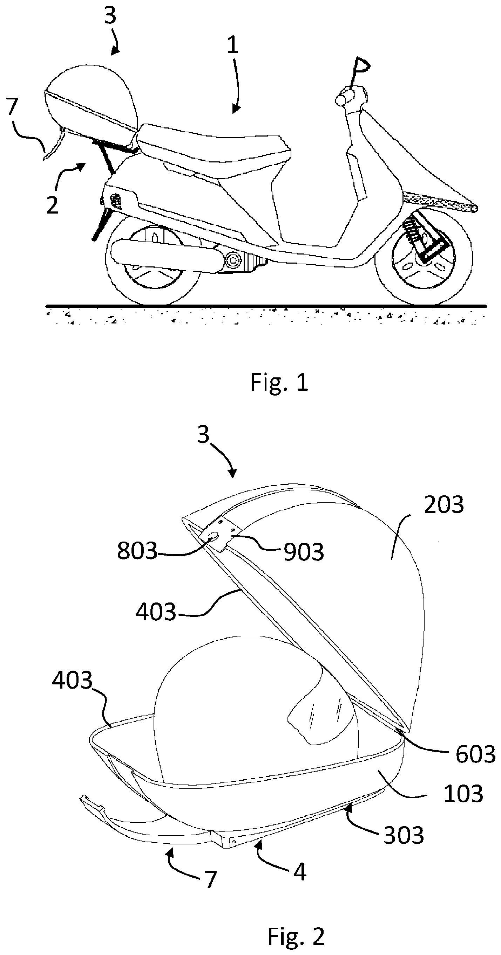

With reference to figure 1 and following, a motor cycle 1 has at its rear end a luggage rack bracket 2 to which a trunk 3 can be fixed.

The trunk 3 can be defined by a three-dimensional shell of rigid material, soft but such as to maintain a predetermined three-dimensional shape or by soft material in the form of a leaf, cloth or the like.

In the illustrated embodiment, the three-dimensional shell of the trunk 3 has a lower side 303 and is divided according to a horizontal or substantially horizontal separation line 403, i.e. also slightly inclined into two half-shells 103, 203 of which a lower half-shell 103 and a upper half-shell 203. The upper half-shell 203 is articulated to the lower one with articulation means 603, such as a hinge mounted or defined by a bridge of one-piece material with one or both half-shells. The articulation 603 is provided along a segment of the separation line which is substantially provided along the front side of the trunk 3 with reference to the condition mounted on the motor cycle 1. The remaining segment of the separation line 403 extends from one to the other of the two ends of the articulation line 603 of the two half shells 103, 203 between them.

Along said articulation segment 603, along the separation line 403, it is possible to provide removable connection means of the two half-shells 103, 203 which can be of any type.

In the variant shown in the figures, the connection means of the two half-shells 103, 203 to each other, for closing/opening the trunk, are indicated in a generic way by the flange 43 overlapping the upper half-shell 103 to the edge of the upper half-shell 203 along the separation line 403.

Said means may comprise for example magnetic means extending along the entire separation line 403 and which hold the two half-shells against each other with a force that can be overcome by manual action. Alternatively, said means can be interlocking means of the two half-shells along said separation line 403 which act along the whole said line or in one or a plurality of predetermined points and which can have actuation elements, for the control in condition of mutual engagement and disengagement and therefore of release or retention of the two half-shells respectively one from the other and against each other.

Other alternatives may be, for example, the use of reciprocal hooking tapes such as velcro^{®} or the like.

The assembly of the trunk to the bracket 2 of the motor cycle occurs by means of a hooking element 4 intended to be attached with appropriate means to the bracket 2 of the motor cycle 1 or made in one piece with said bracket 2 which hooking element 4 cooperates with an engagement element 5 intended to be stably attached to the bottom side, i.e. to the lower side of the trunk, i.e. to the lower half-shell 103.

In the embodiment of the preferred example, illustrated here, the hooking element 4 comprises a plate that can be attached by screws to the bracket 2 of the motor cycle 1 which plate has hooks 14 protruding from its upper side.

The hooks 14 are made thanks to radially extended wings, with a substantially L-shaped section, which depart from the upper side of the plate itself, forming an ascending branch 114 and a branch substantially parallel 104 to the plate itself but spaced from this in a predetermined extent.

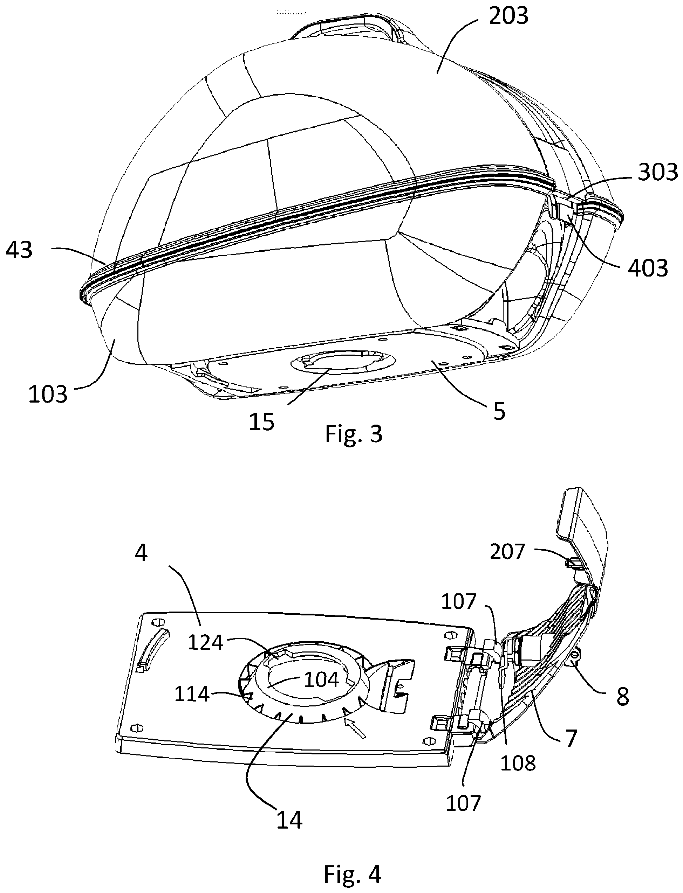

In the embodiment shown in Fig. 4, the wings are turned inwards and are arranged along opposite arcs of a same circumference so as to form an annular guide interrupted by a pair of opposite engagement apertures 124.

The engagement element 5 also comprises a plate intended to be attached to the bottom of the lower half-shell 103.

Advantageously, in order to give greater rigidity and strength, when the material of which the lower half shell 103 is formed is a soft or in any case relatively flexible material, even if capable of maintaining a three-dimensional shape, the plate that forms the engagement element 5 is attached to a bottom plate (not shown) which can be provided inside the lower half shell 103 along the bottom side thereof or can also define a partial cup or a partial covering of said bottom side.

The engagement element 5 carries into positions coinciding with those of the hooks 14 of the hooking element 4 corresponding protruding engagement wings 15.

These wings are also radially extended, with a substantially L-shaped section, and depart from the lower side of the plate of the engagement element 5 forming a descending branch 115 and a branch substantially parallel 105 to the plate itself but spaced from this in a predetermined extent.

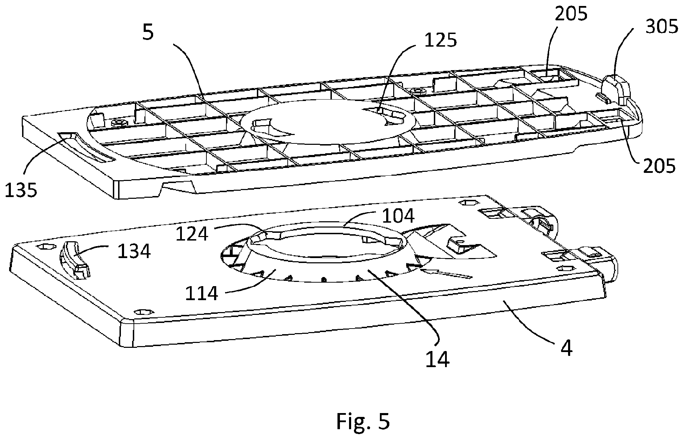

In the embodiment shown in Fig. 5, the wings are turned outwards and are arranged along the same circumference so as to form an annular guide complementary to the guide formed by the wings of the hooking element 4 shown in Fig. 4. The wings 15 have complementary radial protrusions 125 in correspondence with the engagement openings 124 of the hooking element 4 so as to ensure a mutual engagement and disengagement of each wing 105 in and from each hook 104 with a roto-translational movement of the two elements 4 and 5 as bayonet coupling.

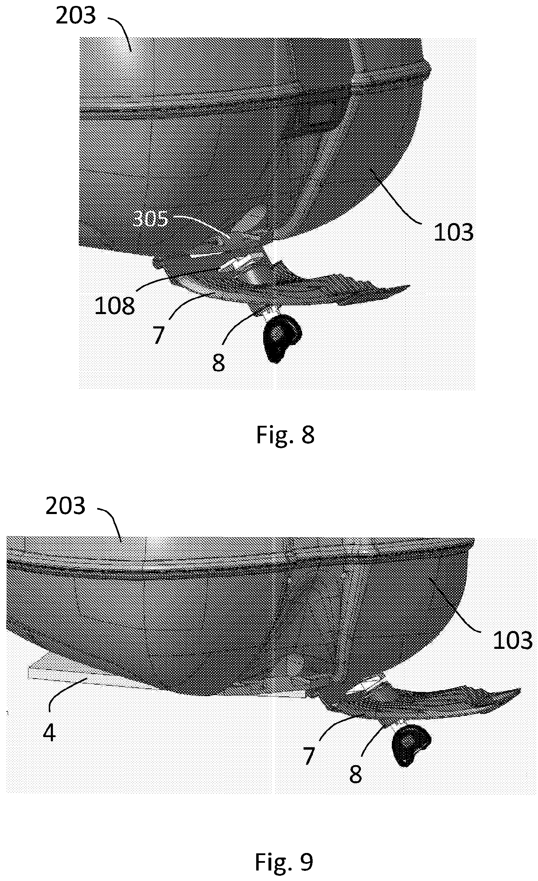

The apertures 124 and the complementary protrusions 125 are advantageously provided offset so that the engagement element 5 and the hooking element 4 can couple/uncouple only when the engagement element 5 is rotated by a determined angle with respect to the hooking element 4, i.e. respective plates are not aligned as shown in Fig. 9.

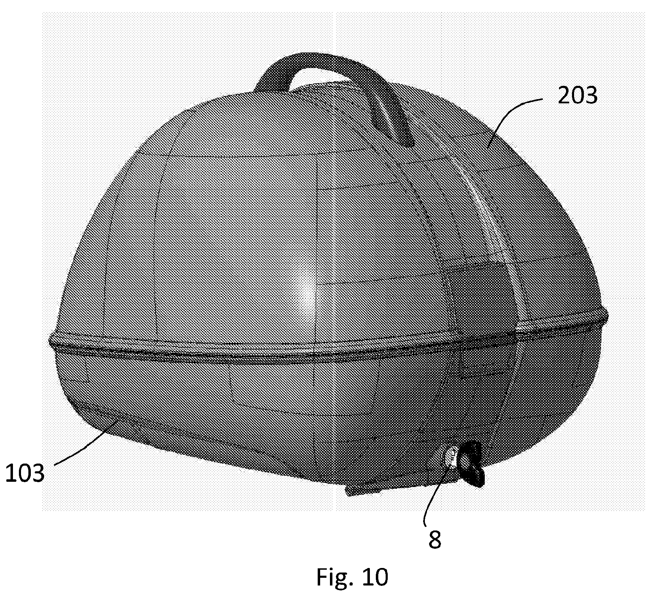

In hooking position the engagement element 5 is substantially aligned with the hooking element 4. The disengagement of the trunk from the frame occurs by rotating the same from the position shown in Fig. 10, wherein the plates are aligned, to the position shown in Fig. 9 wherein the plates are offset. In this position there is the alignment of the apertures 124 of the hooking element 4 with the corresponding protrusions/enlargements 125 of the engagement element 5 so that it is possible to release the wings 15 from the hooks 14 with a translational movement away from the hooks 14 and therefore, separate the trunk 3 from the frame.

The attachment of the trunk 3 to the frame occurs by performing the same movements in the opposite direction, i.e. by rotating the trunk so as to align the protrusions 125 with the apertures 124, pushing the trunk towards the hooking element 4 to ensure the engagement of the protrusions 125 in the apertures 124, rotating the trunk 3 so as to guarantee coupling until reaching the position of end engagement with aligned plates.

Obviously, the conformation of the wings of the hooking element 4 and of the engagement element 5 can also be complementary, i.e. the former can be turned outwards and the latter inwards with interchanged apertures and protrusions. Several arcuate coupling guides can also be provided, separated and arranged in different points of the plates with conformations such as to guarantee engagement/disengagement by means of a roto-translational movement of the trunk with respect to the frame of the motor cycle.

The hooking element 4 and the engagement element 5 can also be optionally provided with cooperating guides for relative positioning 135, 135 in a correct reciprocal centering position as shown in Fig. 5.

On the rear side of the plate that forms the hooking element 4, a locking lever 7 is articulated in an oscillating manner around an axis perpendicular to the longitudinal axis of the motor cycle.

This lever carries near its articulation end a lock mechanism 8 which will be described in more detail below.

Apart from some construction details, the hooking element 4 with the locking lever 7, the engagement element 5 and the bottom plate cooperating with said engagement element 5 are common and substantially identical elements for all the embodiments illustrated and described below in greater detail.

In all the embodiments, the lever 7 is provided in such a position and with such a shape and dimensions, so that in a downward tilted condition it does not interfere with the three-dimensional half-shell and the engagement plate 5 which is therefore free to rotate in the direction of the disengagement stroke from the hooking element 4, allowing to detach the trunk from the motor cycle.

In the position tilted upwards, the locking lever 7 defines a retaining block in the condition of engagement of the engagement element 5 in the hooking element 4, thus preventing the execution of the reciprocal disengagement stroke of said two elements between them and therefore the detachment of the trunk 3 from the motor cycle 1.

The retaining block occurs by means of one or more hooks 107 carried by the locking lever 7 which engage in corresponding hooking seats 205 of the plate of the engagement element 5. Fig. 4 shows an example with a pair of hooks 107 arranged at the opposite sides of the lever 7. Obviously, these can be in any number and shape and can alternatively be carried by the engagement element 5 with the hooking seats arranged on the lever 7. The hooks 107 can also be simple protrusions that engage in openings 205 so as to define a constraint on the rotation of the engagement element 5 with respect to the hooking element 4 to which the lever 7 is articulated.

An activation/deactivation mechanism is associated with the locking lever 7 which allows the lever to be retained in the raised locking condition of the trunk 3 in the engagement condition of the engagement element 5 in the hooking element 4. Such activation/deactivation mechanism of the locking lever 7 can be advantageously controlled by a key lock such as that indicated with 8 in Fig. 4.

As will be seen below, the locking lever 7 can simultaneously have the function of retaining the two half-shells 103, 203 in the closed condition of the trunk 3.

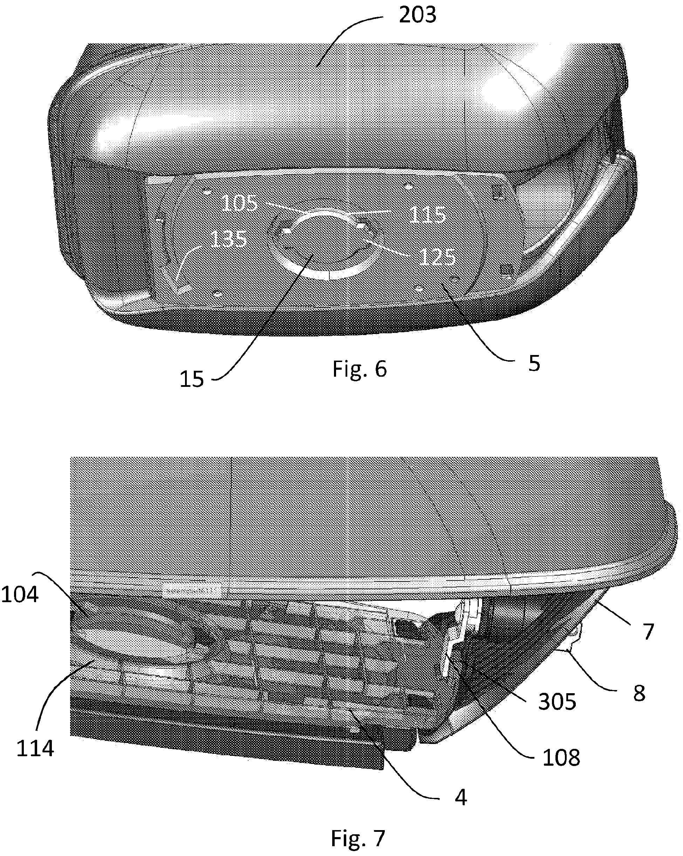

The lock 8 acts on a turning lever 108 which engages in rotation on the rear of a hooking wing 305 present on the engagement plate 5. When the lever 108 is in the engaged position, the articulation of the lever 7 from its position tilted upwards is prevented as shown in Fig. 7.

In trunks according to the prior art, the lock 8 is typically located near the free end of the lever 7 and is adapted for locking the lever on the upper half-shell 203. Although less robust, this solution is not excluded as an alternative or in addition to the version with lock 8 for locking the lever 7 on the engagement element 5 described above.

Also the presence of the engagement hooks 107 on the engagement element 5 is not indispensable since the locking by rotation can also be obtained by directly locking one of the half-shells or both half-shells to the lever 7 with appropriate attachment means even if the solution with engagement hooks is to be preferred as it is capable to give greater strength and reliability to the structure.

The two half-shells 103, 203 can be locked together by separate locking means or by the locking lever 7 itself.

In this case, both the locking lever 7 and the locking means of the two half-shells 103, 203 in the closed condition of the trunk can be controlled by the same key mechanism 8 or by a second key device located near to the free end of the lever 7.

It is possible to provide that the upper half-shell 103 has a hooking projection 403 in a position coinciding with a hooking seat 207 provided at the free end of the locking lever 7 or vice versa.

The second key activation/deactivation mechanism, if present, in this case can cooperate with the hooking projection by holding it stably or releasing it from the hooking seat.

An alternative solution can be that of providing that the upper half-shell 203 has an appendix 303 that partially overlaps the lower half-shell with closed trunk and such appendix is equipped with a head, a pin with engagement notch, or more generally with an engagement area 403 with a corresponding hooking element 207 carried by the lever 7 on its internal side facing the trunk as shown in Fig. 3 and 4. In this way, the hooking mechanism is made inaccessible from the outside, ensuring greater safety against tampering.

## Claims

1. Trunk for motor cycles or motor bicycles comprising:
a three-dimensional shell or a soft, flexible casing enclosed on itself that delimits a housing compartment and is formed by two parts (103, 203) of a shell or of a casing that mutually complete each other in said three-dimensional shell or said flexible casing, said at least two parts of said shell or casing are separated from each other by a separation line (403) extending from one end to the other end of a hinge portion (603) for hinging said two parts of said shell or casing to each other, in such a way that said two parts (103, 203) of the shell or casing can be moved away from each other and towards each other respectively in an open position of said three-dimensional shell or casing and in a closed position of said three-dimensional shell or casing, and providing means for removably retaining said two said shell portions to each other in said closed position of the three-dimensional shell or said casing;
removable attachment members of said three-dimensional shell to a structural part of the motor cycle, which members comprise at least a first hooking element (4) intended to be stably fixed to said structural part (2) of the motor cycle and a second engagement element (5) which is carried by at least one of said two parts (103) of the shell or of the casing and which is engageable and disengageable from said hooking element (4) by means of a relative movement along an engagement/disengagement stroke according to a predetermined path, being provided further locking elements (7) of said engagement element (5) in said hooking element (4) in the engagement position which is switchable from a locking position into an unlocking position,
whereby
the engagement/disengagement movement of said engagement element (5) from said hooking element (4) comprises a stroke which occurs along a circumferential arc so that engagement between said hooking element (4) and said engagement element (5) occurs by rotating said engagement element (5) in a direction relative to said hooking element (4) and disengagement occurs by rotating said engagement element (5) in the opposite direction,
said locking elements (7) preventing the rotation of the engagement element (5) relative to the hooking element (4) when the engagement element (5) is engaged in the hooking element (4), **characterized in that** the locking elements (7) of the engagement element (5) in the hooking element (4) comprise at the same time locking members (207) of the two shell parts (103, 203) in the closed position of the three-dimensional shell that are activated and deactivated simultaneously with the locking member of the engagement element (5).

2. Trunk according to claim 1, **characterized in that** the locking means (7) are activatable or deactivatable by an activation/deactivation mechanism (8, 108) comprising a key lock.

3. Trunk according to one or more of the preceding claims, **characterized in that** the hooking element (4) comprises at least one arcuate hook (14) oriented with the engagement opening substantially in a vertical way, while the engagement element (5) carried by one of the two shell parts (103) is provided with at least one corresponding arcuate engagement wing (15), which wing is intended to be engaged in the corresponding hook by a translation that brings the wing into a alignment position with the hook opening followed by rotation in a substantially horizontal or slightly inclined plane, the hooking element (4) and the engagement element (5) being provided with cooperating guides for relative positioning in a proper alignment position of the wing (15) on the hook (14).

4. Trunk according to claim 3, wherein the hook (14) extends along a circumference so as to form an annular groove, the positioning guides comprising apertures (124) interrupting said annular groove so as to receive corresponding protrusions (125) of the engagement wing (15) when the engagement element (5) is moved to overlap the hooking element (4).

5. Trunk according to claim 4, wherein the openings (124) and corresponding protrusions (125) are provided offset so that engagement element (5) and hooking element (4) can couple when the engagement element (5) is rotated by a certain angle relative to the hooking element (4).

6. Trunk according to one or more of the preceding claims, wherein in the hooking position, the engagement element (5) is substantially aligned with the hooking element (4).

7. Trunk according to one or more of the preceding claims, wherein the locking members comprise a lever (7) mounted swingable about a transverse axis with reference to the direction of movement of the motorcycle and at or near the rear end of the hooking element (4), said lever (7) being angularly displaceable, alternatively in a position of non-interference with the three-dimensional shell and/or the engagement element (5) engaged on the hooking element (4), so that the engagement element (5) and therefore said shell are rotatable together along the engagement/disengagement stroke from the engagement element (5) and in a position tilted upwards against the rear side of the three-dimensional shell so as to provide a stopper to the free rotation of the engagement element (5) in the direction of disengagement of the latter from the hooking element (4).

8. Trunk according to claim 7, wherein the locking members comprise a locking element for the disengaging stroke of the engagement element (5) from the condition engaged in the hooking element (4) to the condition disengaged therefrom, wherein said locking element is associated with the lever (7) and comprises at least one protrusion/opening (107) that couples with a corresponding opening/protrusion (205) of the engagement element (5) when the lever (7) is in an upwardly tilted position so as to prevent rotation of the engagement element (5) relative to the hooking element (4).

9. Trunk according to claim 8, wherein the locking lever (7) comprises a pair of hooks (107) cooperating with corresponding hooking seats (205) provided on the engagement element (5).

10. Trunk according to one or more of the preceding claims, wherein the mechanism (8) for activating/deactivating the locking means comprises retaining means (108) of said locking lever (7) in the raised locking position against the rear side of the three-dimensional shell, which retaining means (108) are controllable in the activated/deactivated position by means of a key mechanism (8).

11. Trunk according to claim 10, wherein the retaining means comprise cooperating mutual engagement means (108, 305) between engagement element (5) and lever (7) controlled by a key mechanism (8) for locking/unlocking at the engagement position of said mutual engagement means of the lever (7) and of the engagement element (5).

12. Trunk according to one or more of the preceding claims, wherein at least the shell part (203) not carrying the engagement element (5) and the locking member (7) have cooperating mutual engagement means (207, 303, 403) for locking/unlocking said locking member (7) on said shell part (203).

13. Trunk according to claim 12, wherein the cooperating mutual engagement means comprise an engagement projection (403) on which the hooking lever (7) overlaps against the rear side of the trunk (3) so as to prevent the opening of the trunk when the lever (7) is in the locked position.

14. Trunk according to one or more of the preceding claims, **characterized in that** the hooking element (4) and the engagement element (5) comprise two plates, of which the plate forming the hooking element (4) has hooking wings (14) protruding from its upper face and forming hooking recesses having an arcuate form, while the engagement element (5) consists of a plate which can be fixed to the wall of one of the two shell parts (103) and which has, in a raised position and corresponding to the engagement opening of each hooking wing (14), an engagement wing (15), the engagement wings (15) being projecting laterally from a central circular element for which the hooking wings (14) themselves form an annular guide for reciprocal sliding of the engagement element (5) around the hooking element (4) in the direction of the engagement/disengagement stroke.

15. Trunk according to one or more of the preceding claims, wherein at the rear end of the plate forming the hooking element (4) is hinged in a swingable manner about an axis perpendicular to the direction of movement a locking lever (7) having a shape and a length such that it overlaps in a raised position to the rear side of the three-dimensional shell and in particular to the two shell parts (103, 203), whereas the two shell parts are substantially two half-shells comprising an upper half-shell and a lower half-shell, the separation line (403) being in the form of a line closed along the entire perimeter and the two half-shells (103, 203) being stably articulated to each other by means of an articulation along at least a portion of said separation line (403), a portion of the separation line opposite the articulation being provided coincident with the overlapping area of the locking lever (7) to the shell, said locking lever (7) and/or the upper half-shell (103) being provided with an engagement projection (207, 403) for stable retention of the upper half-shell to the lower half-shell, when the lever is in the locking position of the engagement element (5) to the hooking element (4).

16. Trunk according to one or more of the preceding claims, wherein an engagement projection (403) is provided on an extension (303) of the upper half shell (103) in the area of the separation edge (403) from the lower half shell (203) and in coincidence with the overlapping area of the locking lever (7), while the lever (7) in the mounted condition of the trunk to the motorcycle overlaps the said engagement projection against the rear side of the trunk (3) and hooks with a key mechanism (8) in the engagement element (5).

## Patentansprüche

1. Koffer für Motorräder oder Motorfahrräder, umfassend:
eine dreidimensionale Schale oder ein in sich geschlossenes, weiches, flexibles Gehäuse, das ein Aufnahmefach abgrenzt und aus zwei Schalen- oder Gehäuseteilen (103, 203) gebildet ist, die sich zu der dreidimensionalen Schale oder dem flexiblen Gehäuse einander ergänzen, wobei die mindestens zwei Teile der Schale oder des Gehäuses durch eine Trennlinie (403) voneinander getrennt sind, die sich von einem Ende zum anderen Ende eines Scharnierabschnitts (603) erstreckt, um die beiden Teile der Schale oder des Gehäuses so aneinander gelenkig zu verbinden, dass die beiden Teile (103, 203) der Schale oder des Gehäuses voneinander weg und aufeinander zu jeweils in eine offene Position der dreidimensionalen Schale oder des Gehäuses und in eine geschlossene Position der dreidimensionalen Schale oder des Gehäuses bewegt werden können, und Mittel zum lösbaren Aneinanderhalten der beiden Schalenabschnitte in der geschlossenen Position der dreidimensionalen Schale oder des Gehäuses;
lösbare Befestigungselemente der dreidimensionalen Schale zur Befestigung an einem Bauteil des Motorrads, wobei diese Elemente mindestens ein erstes Hakenelement (4), das dazu bestimmt ist, fest an dem genannten Bauteil (2) des Motorrads befestigt zu werden, und ein zweites Eingriffselement (5) umfassen, das von mindestens einem der beiden Teile (103) der Schale oder des Gehäuses getragen wird und mittels einer Relativbewegung entlang eines Eingriffs-/Lösewegs gemäß einer vorgegebenen Bahn mit dem Hakenelement (4) in Eingriff gebracht und von diesem gelöst werden kann, wobei ferner Verriegelungselemente (7) des Eingriffselements (5) in dem Hakenelement (4) in der Eingriffsposition vorgesehen sind, die von einer Verriegelungsposition in eine Entriegelungsposition schaltbar sind,
wobei die Eingriffs-/Lösebewegung des Eingriffselements (5) aus dem Hakenelement (4) einen Weg umfasst, der entlang eines Umfangsbogens verläuft, so dass der Eingriff zwischen dem Hakenelement (4) und dem Eingriffselement (5) durch Drehen des Eingriffselements (5) in eine Richtung relativ zum Hakenelement (4) erfolgt und das Lösen durch Drehen des Eingriffselements (5) in die entgegengesetzte Richtung erfolgt,
wobei die Verriegelungselemente (7) die Drehung des Eingriffselements (5) relativ zum Hakenelement (4) verhindern, wenn das Eingriffselement (5) mit dem Hakenelement (4) in Eingriff steht, **dadurch gekennzeichnet, dass** die Verriegelungselemente (7) des Eingriffselements (5) im Hakenelement (4) zugleich Verriegelungsglieder (207) der beiden Schalenteile (103, 203) in der geschlossenen Position der dreidimensionalen Schale umfassen, die zeitgleich mit dem Verriegelungsglied des Eingriffselements (5) aktiviert und deaktiviert werden.

2. Koffer nach Anspruch 1, **dadurch gekennzeichnet, dass** die Verriegelungsmittel (7) durch einen ein Schlüsselschloss umfassenden Aktivierungs-/Deaktivierungsmechanismus (8, 108) aktivierbar oder deaktivierbar sind.

3. Koffer nach einem der vorhergehenden Ansprüche, **dadurch gekennzeichnet, dass** das Hakenelement (4) mindestens einen bogenförmigen Haken (14) umfasst, der mit der Eingriffsöffnung im Wesentlichen vertikal ausgerichtet ist, während das von einem der beiden Schalenteile (103) getragene Eingriffselement (5) mit mindestens einem entsprechenden bogenförmigen Eingriffsflügel (15) versehen ist, wobei der Flügel dazu bestimmt ist, mit dem entsprechenden Haken in Eingriff zu kommen mittels einer den Flügel in eine Ausrichtungsposition mit der Hakenöffnung bringenden Verfahrbewegung, gefolgt von einer Drehung in einer im Wesentlichen horizontalen oder leicht geneigten Ebene, wobei das Hakenelement (4) und das Eingriffselement (5) mit zusammenwirkenden Führungen versehen sind, die zur relativen Positionierung in einer korrekten Ausrichtungsposition des Flügels (15) auf dem Haken (14) dienen.

4. Koffer nach Anspruch 3, wobei sich der Haken (14) entlang eines Umfangs derart erstreckt, dass er eine Ringnut bildet, wobei die Positionierungsführungen Öffnungen (124) umfassen, die die Ringnut unterbrechen, um entsprechende Vorsprünge (125) des Eingriffsflügels (15) aufzunehmen, wenn das Eingriffselement (5) in Überlappung mit dem Hakenelement (4) bewegt wird.

5. Koffer nach Anspruch 4, wobei die Öffnungen (124) und die entsprechenden Vorsprünge (125) versetzt angeordnet sind, so dass das Eingriffselement (5) und das Hakenelement (4) miteinander gekoppelt werden können, wenn das Eingriffselement (5) um einen bestimmten Winkel relativ zum Hakenelement (4) gedreht wird.

6. Koffer nach einem oder mehreren der vorhergehenden Ansprüche, wobei das Eingriffselement (5) in der Einhakposition im Wesentlichen mit dem Hakenelement (4) ausgerichtet ist.

7. Koffer nach einem oder mehreren der vorhergehenden Ansprüche, wobei die Verriegelungsglieder einen Hebel (7) umfassen, der um eine Querachse in Bezug auf die Bewegungsrichtung des Motorrads und an oder nahe dem hinteren Ende des Hakenelements (4) schwenkbar montiert ist, wobei der Hebel (7) wechselweise in eine Nichtinterferenz-Position mit der dreidimensionalen Schale und/oder dem mit dem Hakenelement (4) in Eingriff stehenden Eingriffselement (5) winklig verschiebbar ist, so dass das Eingriffselement (5) und damit die Schale zusammen entlang des Eingriffs-/Lösewegs vom Eingriffselement (5) drehbar sind, sowie in eine nach oben gegen die Rückseite der dreidimensionalen Schale geneigte Position, um als Anschlag für die freie Drehung des Eingriffselements (5) in Löserichtung des letzteren vom Hakenelement (4) zu wirken.

8. Koffer nach Anspruch 7, wobei die Verriegelungsglieder ein Verriegelungselement für den Löseweg des Eingriffselements (5) aus dem mit dem Hakenelement (4) in Eingriff stehenden Zustand in den davon gelösten Zustand umfassen, wobei das Verriegelungselement dem Hebel (7) zugeordnet ist und mindestens einen Vorsprung/eine Öffnung (107) umfasst, der/die mit einer entsprechenden Öffnung/einem entsprechenden Vorsprung (205) des Eingriffselements (5) koppelt, wenn sich der Hebel (7) in einer nach oben geneigten Position befindet, um die Drehung des Eingriffselements (5) relativ zum Hakenelement (4) zu verhindern.

9. Koffer nach Anspruch 8, wobei der Verriegelungshebel (7) ein Paar Haken (107) umfasst, die mit entsprechenden am Eingriffselement (5) vorgesehenen Hakensitzen (205) zusammenwirken.

10. Koffer nach einem oder mehreren der vorhergehenden Ansprüche, wobei der Mechanismus (8) zum Aktivieren/Deaktivieren der Verriegelungsmittel Haltemittel (108) des Verriegelungshebels (7) in der angehobenen Verriegelungsposition gegen die Rückseite der dreidimensionalen Schale umfasst, wobei die Haltemittel (108) in der aktivierten/deaktivierten Position mittels eines Schlüsselmechanismus (8) steuerbar sind.

11. Koffer nach Anspruch 10, wobei die Haltemittel zusammenwirkende gegenseitige Eingriffsmittel (108, 305) zwischen dem Eingriffselement (5) und dem durch einen Schlüsselmechanismus (8) gesteuerten Hebel (7) zum Verriegeln/Entriegeln in der Eingriffsposition der gegenseitigen Eingriffsmittel des Hebels (7) und des Eingriffselements (5) umfassen.

12. Koffer nach einem oder mehreren der vorhergehenden Ansprüche, wobei mindestens der das Eingriffselement (5) und das Verriegelungsglied (7) nicht tragende Schalenteil (203) zusammenwirkende gegenseitige Eingriffsmittel (207, 303, 403) zum Verriegeln/Entriegeln des Verriegelungsglieds (7) an diesem Schalenteil (203) aufweist.

13. Koffer nach Anspruch 12, wobei die zusammenwirkenden gegenseitigen Eingriffsmittel einen Eingriffsvorsprung (403) umfassen, auf dem der Hakenhebel (7) gegen die Rückseite des Koffers (3) überlappt, um ein Öffnen des Koffers zu verhindern, wenn sich der Hebel (7) in der Verriegelungsposition befindet.

14. Koffer nach einem oder mehreren der vorhergehenden Ansprüche, **dadurch gekennzeichnet, dass** das Hakenelement (4) und das Eingriffselement (5) zwei Platten umfassen, von denen die das Hakenelement (4) bildende Platte Hakenflügel (14) aufweist, die von ihrer Oberseite vorstehen und bogenförmige Eingriffsaussparungen bilden, während das Eingriffselement (5) aus einer Platte besteht, die an der Wand eines der beiden Schalenteile (103) befestigt werden kann und die in einer angehobenen Position und korrespondierend zur Eingriffsöffnung jedes Hakenflügels (14) einen Eingriffsflügel (15) aufweist, wobei die Eingriffsflügel (15) seitlich von einem zentralen kreisförmigen Element vorstehen, für das die Hakenflügel (14) selbst eine Ringführung für das gegenseitige Gleiten des Eingriffselements (5) um das Hakenelement (4) herum in Richtung des Eingriffs-/Lösewegs bilden.

15. Koffer nach einem oder mehreren der vorhergehenden Ansprüche, wobei am hinteren Ende der das Hakenelement (4) bildenden Platte ein Verriegelungshebel (7) schwenkbar um eine Achse senkrecht zur Bewegungsrichtung angelenkt ist und eine derartige Form und Länge aufweist, dass er in einer angehobenen Position die Rückseite der dreidimensionalen Schale und insbesondere die beiden Schalenteile (103, 203) überlappt, während die beiden Schalenteile im Wesentlichen zwei Halbschalen sind, die eine obere Halbschale und eine untere Halbschale umfassen, wobei die Trennlinie (403) in Form einer entlang des gesamten Umfangs geschlossenen Linie verläuft und die beiden Halbschalen (103, 203) mittels eines Gelenks entlang mindestens eines Abschnitts der genannten Trennlinie (403) fest miteinander angelenkt sind, wobei ein Abschnitt der Trennlinie gegenüber dem Gelenk mit dem Überlappungsbereich des Verriegelungshebels (7) an der Schale zusammenfällt, wobei der Verriegelungshebel (7) und/oder die obere Halbschale (103) mit einem Eingriffsvorsprung (207, 403) zum stabilen Halten der oberen Halbschale an der unteren Halbschale versehen sind, wenn sich der Hebel in der Verriegelungsposition des Eingriffselements (5) am Hakenelement (4) befindet.

16. Koffer nach einem oder mehreren der vorhergehenden Ansprüche, wobei ein Eingriffsvorsprung (403) auf einer Verlängerung (303) der oberen Halbschale (103) im Bereich der Trennkante (403) von der unteren Halbschale (203) und zusammenfallend mit dem Überlappungsbereich des Verriegelungshebels (7) vorgesehen ist, während der Hebel (7) im montierten Zustand des Koffers am Motorrad den Eingriffsvorsprung gegen die Rückseite des Koffers (3) überlappt und sich mit einem Schlüsselmechanismus (8) am Eingriffselement (5) verhakt.

## Revendications

1. Coffre pour motocyclettes ou vélos à moteur, comprenant:
une coque tridimensionnelle ou un boîtier souple et flexible replié sur lui-même qui délimite un compartiment de logement et qui est formé de deux parties (103, 203) d'une coque ou d'un boîtier qui se complètent de manière réciproque dans ladite coque tridimensionnelle ou dans ledit boîtier flexible, lesdites au moins deux parties de ladite coque ou dudit boîtier sont séparées entre elles par une ligne de séparation (403) s'étendant d'une extrémité à l'autre d'une portion de charnière (603) pour articuler lesdites deux parties de ladite coque ou dudit boîtier entre elles, de manière que lesdites deux parties (103, 203) de la coque ou du boîtier puissent être écartées et rapprochées entre elles respectivement dans une position ouverte de ladite coque tridimensionnelle ou dudit boîtier et dans une position fermée de ladite coque tridimensionnelle ou dudit boîtier, et prévoyant des moyens pour retenir lesdites deux portions de coque attachées entre elles de manière amovible dans ladite position fermée de la coque tridimensionnelle ou dudit boîtier;
des organes de fixation amovibles de ladite coque tridimensionnelles à une partie structurelle de la motocyclette, lesquels organes comprennent au moins un premier élément d'accrochage (4) destiné à être fixé de manière stable à ladite partie structurelle (2) de la motocyclette et un second élément d'engagement (5) qui est porté par au moins l'une desdites deux parties (103) de la coque ou du boîtier et qui peut être engagé et désengagé dudit élément d'accrochage (4) au moyen d'un mouvement relatif le long d'une course d'engagement/de désengagement selon un parcours prédéterminé, des éléments de verrouillage (7) supplémentaires dudit élément d'engagement (5) étant prévus dans ledit élément d'accrochage (4) dans la position d'engagement qui peut être commutés d'une position verrouillée à une position déverrouillée,
de sorte que le mouvement d'engagement/de désengagement dudit élément d'engagement (5) par rapport audit élément d'accrochage (4) comprend une course qui se produit le long d'un arc circonférentiel de manière à ce que l'engagement entre ledit élément d'accrochage (4) et ledit élément d'engagement (5) se produise en tournant ledit élément d'engagement (5) dans une direction par rapport audit élément d'accrochage (4) et que le désengagement se produise en tournant ledit élément d'engagement (5) dans la direction opposée,
lesdits éléments de verrouillage (7) empêchant la rotation de l'élément d'engagement (5) par rapport à l'élément d'accrochage (4) lorsque l'élément d'engagement (5) est engagé dans l'élément d'accrochage (4), **caractérisé en ce que** les éléments de verrouillage (7) de l'élément d'engagement (5) dans l'élément d'accrochage (4) comprennent simultanément des organes de verrouillage (207) des deux parties de coque (103, 203) dans la position fermée de la coque tridimensionnelle qui sont activés et désactivés simultanément avec l'élément de verrouillage de l'élément d'engagement (5).

2. Coffre selon la revendication 1, **caractérisé en ce que** les moyens de verrouillage (7) peuvent être activés ou désactivés par un mécanisme d'activation/de désactivation (8, 108) comprenant une serrure à clé.

3. Coffre selon l'une ou plusieurs des revendications précédentes, **caractérisé en ce que** l'élément d'accrochage (4) comprend au moins un crochet arqué (14) orienté avec l'ouverture d'engagement de manière sensiblement verticale, tandis que l'élément d'engagement (5) porté par l'une des deux parties de coque (103) est muni d'au moins une ailette d'engagement arquée (15) correspondante, laquelle ailette est destinée à être engagée dans le crochet correspondant par une translation qui amène l'ailette dans une position d'alignement avec l'ouverture du crochet, suivie d'une rotation dans un plan sensiblement horizontal ou légèrement incliné, l'élément d'accrochage (4) et l'élément d'engagement (5) étant pourvus de guides coopérants pour un positionnement relatif dans une position d'alignement appropriée de l'ailette (15) sur le crochet (14).

4. Coffre selon la revendication 3, dans lequel le crochet (14) s'étend le long d'une circonférence de manière à former une rainure annulaire, les guides de positionnement comprenant des ouvertures (124) qui interrompent ladite rainure annulaire de manière à recevoir des protubérances correspondantes (125) de l'ailette d'engagement (15) lorsque l'élément d'engagement (5) est déplacé pour chevaucher l'élément d'accrochage (4).

5. Coffre selon la revendication 4, dans lequel les ouvertures (124) et les protubérances (125) correspondantes sont prévues décalées de manière à ce que l'élément d'engagement (5) et l'élément d'accrochage (4) puissent s'accoupler lorsque l'élément d'engagement (5) est tourné d'un certain angle par rapport à l'élément d'accrochage (4).

6. Coffre selon l'une ou plusieurs des revendications précédentes, dans lequel l'élément d'engagement (5) est, dans la position d'accrochage, sensiblement aligné avec l'élément d'accrochage (4).

7. Coffre selon l'une ou plusieurs des revendications précédentes, dans lequel les organes de verrouillage comprennent un levier (7) monté de manière oscillante autour d'un axe transversal par rapport à la direction du mouvement de la motocyclette et en correspondance ou à proximité de l'extrémité postérieure de l'élément d'accrochage (4), ledit levier (7) pouvant être déplacé angulairement, alternativement dans une position de non-interférence avec la coque tridimensionnelle et/ou avec l'élément d'engagement (5) engagé sur l'élément d'accrochage (4), de manière que l'élément d'engagement (5) et donc ladite coque puissent tourner ensemble le long de la course d'engagement/de désengagement de l'élément d'engagement (5) et dans une position inclinée vers le haut contre la face postérieure de la coque tridimensionnelle, de manière à constituer un arrêt à la rotation libre de l'élément d'engagement (5) dans la direction de désengagement de ce dernier de l'élément d'accrochage (4).

8. Coffre selon la revendication 7, dans lequel les organes de verrouillage comprennent un élément de verrouillage pour la course de désengagement de l'élément d'engagement (5) de la condition engagé dans l'élément d'accrochage (4) à la condition désengagé du même, dans lequel ledit élément de verrouillage est associé au levier (7) et comprend au moins une protubérance/ouverture (107) se couplant à une ouverture/protubérance (205) correspondante de l'élément d'engagement (5) lorsque le levier (7) est dans une position inclinée vers le haut, de manière à empêcher la rotation de l'élément d'engagement (5) par rapport à l'élément d'accrochage (4).

9. Coffre selon la revendication 8, dans lequel le levier de verrouillage (7) comprend une paire de crochets (107) coopérants avec des sièges d'accrochage (205) correspondants prévus sur l'élément d'engagement (5).

10. Coffre selon l'une ou plusieurs des revendications précédentes, dans lequel le mécanisme (8) pour activer/désactiver les moyens de verrouillage comprend des moyens de retenue (108) dudit levier de verrouillage (7) dans la position de verrouillage relevée contre la face postérieure de la coque tridimensionnelle, lesquels moyens de retenue (108) peuvent être contrôlés dans la position activée/désactivée au moyen d'un mécanisme à clé (8).

11. Coffre selon la revendication 10, dans lequel les moyens de retenue comprennent des moyens d'engagement mutuel coopérants (108, 305) entre l'élément d'engagement (5) et le levier (7) contrôlés par un mécanisme à clé (8) pour le verrouillage/déverrouillage dans la position d'engagement desdits moyens d'engagement mutuel du levier (7) et de l'élément d'engagement (5).

12. Coffre selon l'une ou plusieurs des revendications précédentes, dans lequel au moins la partie de coque (203) ne portant pas l'élément d'engagement (5) et l'élément de verrouillage (7) ont des moyens d'engagement mutuel coopérants (207, 303, 403) pour verrouiller/déverrouiller ledit élément de verrouillage (7) sur ladite partie de coque (203).

13. Coffre selon la revendication 12, dans lequel les moyens d'engagement mutuel coopérants comprennent une saillie d'engagement (403) sur laquelle le levier d'accrochage (7) se superpose contre la face postérieure du coffre (3), de manière à empêcher l'ouverture du coffre lorsque le levier (7) est dans la position verrouillée.

14. Coffre selon l'une ou plusieurs des revendications précédentes, **caractérisé en ce que** l'élément d'accrochage (4) et l'élément d'engagement (5) comprennent deux plaques, dont la plaque formant l'élément d'accrochage (4) a des ailettes d'accrochage (14) faisant saillie de sa face supérieure et formant des cavités d'accrochage de forme arquée, tandis que l'élément d'engagement (5) est constitué d'une plaque qui peut être fixée à la paroi d'une des deux parties de coque (103) et qui a, dans une position relevée et correspondante à l'ouverture d'engagement de chaque ailette d'accrochage (14), une ailette d'engagement (15), les ailettes d'engagement (15) faisant saillie latéralement depuis un élément circulaire central pour lequel les ailettes d'accrochage (14) elles-mêmes forment un guide annulaire pour le coulissement réciproque de l'élément d'engagement (5) autour de l'élément d'accrochage (4) dans la direction de la course d'engagement/de désengagement.

15. Coffre selon l'une ou plusieurs des revendications précédentes, dans lequel, en correspondance de l'extrémité postérieure de la plaque formant l'élément d'accrochage (4), est articulé un levier de verrouillage (7) de manière oscillante autour d'un axe perpendiculaire à la direction de mouvement et ayant une forme et une longueur telles a chevaucher, dans une position relevée, la face postérieure de la coque tridimensionnelle et, notamment, les deux parties de coque (103, 203), tandis que les deux parties de coque sont sensiblement deux demi-coques comprenant une demi-coque supérieure et une demi-coque inférieure, la ligne de séparation (403) étant en forme d'une ligne fermée le long de tout le périmètre et les deux demi-coques (103, 203) étant articulées entre elles de manière stable au moyen d'une articulation le long d'au moins une portion de ladite ligne de séparation (403), une portion de la ligne de séparation opposée à l'articulation étant prévue coïncidente avec la zone de chevauchement du levier de verrouillage (7) par rapport à la coque, ledit levier de verrouillage (7) et/ou la demi-coque supérieure (103) étant prévue avec une saillie d'engagement (207, 403) pour une rétention stable de la demi-coque supérieure par rapport à la demi-coque inférieure, lorsque le levier est dans la position de verrouillage de l'élément d'engagement (5) par rapport à l'élément d'accrochage (4).

16. Coffre selon l'une ou plusieurs des revendications précédentes, dans lequel une saillie d'engagement (403) est prévue sur une extension (303) de la demi-coque supérieure (103) dans la zone du bord de séparation (403) de la demi-coque inférieure (203) et en coïncidence avec la zone de chevauchement du levier de verrouillage (7), tandis que le levier (7) dans la condition montée du coffre sur la motocyclette chevauche ladite saillie d'engagement contre la face postérieure du coffre (3) et s'accroche à un mécanisme à clé (8) dans l'élément d'engagement (5).
